(19) Europäisches Patentamt
European Patent Office
Office européen des brevets

(11) **EP 1 132 343 A2**

(12) **EUROPÄISCHE PATENTANMELDUNG**

(43) Veröffentlichungstag:
**12.09.2001 Patentblatt 2001/37**

(51) Int Cl.$^7$: **C01G 49/06**

(21) Anmeldenummer: **01103623.3**

(22) Anmeldetag: **22.02.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **06.03.2000 DE 10010940**

(71) Anmelder: **BAYER AG**
**51368 Leverkusen (DE)**

(72) Erfinder: **Meisen, Ulrich**
**53925 Kall (DE)**

(54) **Verfahren zur Herstellung von Eisenoxid und seine Verwendung**

(57) Die vorliegende Erfindung betrifft ein Verfahren zur Herstellung von Eisenoxid, ausgehend von $FeCl_2$ und einer alkalischen Komponente sowie dessen Verwendung.

EP 1 132 343 A2

**Beschreibung**

Die vorliegende Erfindung betrifft ein Verfahren zur Herstellung von Eisenoxid, ausgehend von $FeCl_2$ und einer alkalischen Komponente sowie dessen Verwendung.

Die Herstellung von Eisenoxidgelb (im Folgenden auch $\alpha$-FeOOH oder Goethit genannt), ist seit langem bekannt. Eine detaillierte Beschreibung des Standes der Technik findet sich beispielsweise in Ullmans's Encyclopedia of Industrial Chemistry 5th edition, 1992, Vol A20, p. 297 ff.

Zur Herstellung des Eisenoxidgelbs werden das Verfahren nach Penniman-Zoph (US-A 1 327 061; US-A 1 368 748), das Fällverfahren und das Laux-Verfahren angewendet. Beim Penniman-Zoph-Verfahren werden Blechschrott und Eisen-II-sulfat, beim Fällverfahren werden Eisen-II-sulfat oder Eisen-II-chlorid und eine alkalische Komponente (Natronlauge, Ammoniak, $Ca(OH)_2$ etc.) und beim Laux-Verfahren werden Eisenmetall und Nitrobenzol als Rohstoffe eingesetzt.

Bei den beiden erstgenannten Verfahren ist es erforderlich, zunächst einen sogenannten Keim, das ist ein relativ feinteiliger Goethit, herzustellen. Dieser Verfahrensschritt erfolgt gewöhnlich in separaten Reaktoren. Die Keimherstellung selbst erfolgt bei Temperaturen von 30 bis 50°C.

Es ist nicht möglich, bei der üblichen Methode der Keimherstellung das gesamte Eisen-II zu fällen und durch Oxidation in $\alpha$-FeOOH umzuwandeln, da bei pH-Werten von mehr als 6.5 unerwünschter, weil schwarzer, Magnetit entsteht. Die Magnetitbildung ist abhängig von Temperatur, Oxidationsgeschwindigkeit und pH-Wert. Bevorzugt bildet sich Magnetit bei höheren Temperaturen, bei relativ geringer Oxidationsgeschwindigkeit und bei pH-Werten von mehr als 6.5. Bei einem pH-Wert von 8, was der vollständigen Ausfällung des Eisen-II entspricht, bildet sich immer Magnetit. Bei Temperaturen von mehr als 50°C entsteht diese Phase sogar ausschließlich.

Es ist jedoch möglich, bei sehr hohem NaOH-Überschuss auch bei höheren Temperaturen $\alpha$-FeOOH phasenrein zu erhalten. In Abhängigkeit vom NaOH-Überschuss erhält man mehr oder weniger gut ausgeprägte lange Nadeln. Dieses Verfahren (auch alkalisches Fällverfahren genannt) ergibt jedoch in der Regel keine Produkte, die als Farbpigmente einsetzbar sind, da hier das gesamte im Eisenrohstoff enthaltene Mangan mit ausgefällt wird. Mangan, insbesondere in größeren Mengen, führt jedoch zu einem unerwünschten braunen Farbstich. Dieses alkalische Fällverfahren wird daher nicht zur Herstellung von $\alpha$-FeOOH als Farbpigment, sondern zur Herstellung von $\alpha$-FeOOH als Ausgangsmaterial für magnetische, nadelförmige Eisenoxide beschrieben. Üblicherweise wird hierbei zielgerichtet sehr feinteiliges Produkt gewonnen.

Die BET-Oberfläche eines derartigen $\alpha$-FeOOH liegt zwischen 40 und 120 $m^2/g$, was bereits aufgrund der hohen Feinteiligkeit zu einem braunen Farbstich führt. Die Anwesenheit farbgebender Metalle wie z.B. Ni, Cr, Cu, Mn spielen für in den Ausgangsmaterialien für nadelförmige magnetische Eisenoxide keine Rolle; diese Elemente werden vielfach sogar als Zusatz zur Steuerung der magnetischen Eigenschaften eingesetzt.

Weiterhin unterscheiden sich die verschiedenen Eisen-II-Rohstoffe, die zur Keimherstellung eingesetzt werden können, durch ihre Magnetitbildungstendenz.

Eisen-II-chlorid, ein Rohstoff, der bevorzugt einzusetzen wäre, da er sehr kostengünstig erhältlich ist, bildet vergleichsweise viel Magnetit. Hier tritt die Magnetitbildung bei pH 6.5 bereits bei 39°C ein. In nicht gekühlten Reaktoren ist deshalb mit diesem Rohstoff die Magnetitbildung nicht zu verhindern.

Eisen-II-sulfat bildet unter diesen Bedingungen noch keinen Magnetit, ist jedoch deutlich teurer und wird gewöhnlich als Feststoff ($FeSO_4 \cdot 7 H_2O$) gehandelt, was eine teure Anlage zur Auflösung des Salzes erforderlich macht.

Aufgrund der beiden Verfahrensschritte Keimherstellung und Pigmentherstellung, die beim Penniman-Zoph-Verfahren und beim Fällverfahren erforderlich sind, sind die Herstellkosten von nach diesen Methoden hergestellten Eisenoxidgelbpigmenten relativ hoch. Auch sind die hierfür erforderlichen Anlagen sehr groß, da die Produktionsraten beider Verfahren in der Pigmentbildungsstufe nur bei 1-2 g Pigment pro Liter und Stunde liegen.

Zur Herstellung von Eisenoxidgelb nach dem Laux-Verfahren ist ausgesuchtes, besonders reines Eisenmetall erforderlich, da andernfalls die Farbqualität des Eisenoxidgelbs deutlich sinkt. Da diese Rohstoffe sehr teuer sind, ist dieses Verfahren zur Herstellung von Eisenoxidgelb nicht wirtschaftlicher als das Penniman-Zoph-Verfahren oder das Fällverfahren.

Aus US-A 2 558 304 ist ein Verfahren zur Herstellung von Eisenoxidgelbpigmenten nach dem Fällverfahren im Alkalischen bekannt. Nach dem dort beschriebenen Verfahren soll es möglich sein, hellgelbe bis tiefbraune Eisenoxidgelbpigmente herzustellen. Hierbei wird zu einer alkalischen Komponente bestehend aus einem Hydroxid der Alkalien oder Erdalkalien eine Lösung eines Eisen-II-salzes ($FeSO_4$ oder $FeCl_2$ werden genannt) gegeben. Am Ende der Fällung liegt das Alkali in einer Menge vor, die mindestens 115% der erforderlichen Menge beträgt. Die Fällung erfolgt bei Temperaturen von weniger als 40°C. Eine Fällung bei höherer Temperatur wird nicht beschrieben, ja es ist nach US-A 2 558 304 günstig, die Reaktion bei geringeren Temperaturen, beispielsweise bei 25°C, durchzuführen. Die Oxidation zum $\alpha$-FeOOH erfolgt dann mit Luft, wobei Oxidationszeiten von 15 Minuten bis zu 30 Stunden erforderlich sind. Typische Konzentrationen der Eisensalze liegen bei 100 g Fe pro Liter. Die Konzentration der alkalischen Komponente liegt ebenfalls im Bereich von 100 g/l für den Fall der Verwendung von NaOH. Dieses Verfahren liefert sehr feinteilige, teilweise sogar transparente Eisenoxidgelbpigmente.

Die Beschränkung der Reaktionstemperatur auf 40°C erschwert die technische Durchführbarkeit, weil dadurch nur sehr langsam oxidiert werden kann. Wird die Oxidation schneller und in relativ großen Reaktoren ($\sim$ 100 m$^3$ Volumen) durchgeführt, so ist es ohne Kühlung nicht mehr möglich, die entstehende Reaktionswärme (120 kcal/mol entspr. 502 kJ/mol FeOOH) abzuführen.

Das beschriebene Verfahren ist also nur mit einer sehr aufwendigen und kostenintensiven Kühlung oder in kleinen Reaktoren oder mit langen Oxidationszeiten durchführbar. Alle drei Faktoren machen dieses Verfahren daher unwirtschaftlich, wenn kostengünstige Eisenoxidgelbpigmente, vorzugsweise für die Bauindustrie, hergestellt werden sollen.

Darüber hinaus sind zahlreiche Veröffentlichungen zur Herstellung von Eisenoxidgelb nach dem Fällverfahren im Alkalischen als Ausgangsmaterial für nadelförmige magnetische Eisenoxide bekannt. Hierbei spielt die Farbqualität des Eisenoxidgelbs keinerlei Rolle. Beispielhaft sei DE-A 2 455 158 erwähnt, in dem die Herstellung eines Eisenoxidgelbs im Alkalischen durch Oxidation einer wässrigen Lösung eines Eisen-II-salzes mit einem Alkali- oder Erdalkalimetallnitrat oder -chlorat beschrieben wird. Über die Farbeigenschaften der erhaltenen Produkte wird nichts ausgesagt, sie spielen für die erfindungsgemäße Bestimmung auch keinerlei Rolle. Zur Herstellung eines besonders kostengünstigen Eisenoxidgelbs ist das Verfahren aufgrund der Verwendung relativ teurer Oxidationsmittel ungeeignet. Wird ein Eisen-II-salz mit mehr als 4 mol-% Fe-III und/oder ein solches mit mehr als 0.7 Gew.-% Mn (bezogen auf den Fe-Gehalt des Eisen-II-salzes) verwendet, so erhält man keine geeigneten Farbpigmente. Mit Verfahren, in denen derartige Einsatzstoffe verwendet werden, können daher keine Gelbpigmente zur Einfärbung von Betonteilen, Kunststoffen, Papier oder ähnlichen Medien hergestellt werden, denn es bildet sich schwarzer Magnetit, wenn zu viel Fe-III vorhanden ist oder das Gelbpigment wird dunkelbräunlich, wenn zu viel Mangan enthalten ist.

Aufgabe der vorliegenden Erfindung war es daher, ein Verfahren zur Verfügung zu stellen, das es gestattet, aus Eisenrohstoffen, die kostengünstig erhältlich sind, in einer sehr einfachen und daher kostengünstigen Verfahrensweise Eisenoxidgelb herzustellen.

Diese Aufgabe konnte durch das erfindungsgemäße Verfahren gelöst werden, bei dem zur Herstellung eines Eisenoxidgelbs nach dem alkalischen Fällverfahren ausgehend von Lösungen von FeSO$_4$ oder FeCl$_2$ mit einem Fe-III-Gehalt von bis zu 4.0 mol-% Fe-III, bevorzugt 0.5 bis 1.5 mol-% Fe-III und einem Mn-Gehalt von bis zu 0.7 Gew.-%, bezogen auf den Fe-Gehalt, bevorzugt von bis zu 0.4 Gew.-%, bezogen auf den Fe-Gehalt, in einem Schritt

a) zu einer Lösung oder Suspension einer alkalischen Komponente, die auf eine Temperatur zwischen 42 und 75°C, bevorzugt 45 bis 60°C aufgeheizt wurde, eine Eisen-II-komponente gegeben wird und

b) die entstandene Suspension mit einem Oxidationsmittel solange oxidiert wird, bis alles Eisen-II in Eisen-III als $\alpha$-FeOOH überführt worden ist, wobei

die Zugabe des Oxidationsmittels in einer Geschwindigkeit erfolgt, dass die Oxidationsdauer zwischen 120 und 600, bevorzugt zwischen 180 und 360 Minuten liegt und die Reaktion während der gesamten Oxidationszeit mindestens bei der Temperatur zwischen 42 und 75°C liegt, bei der die Fällung von Fe(OH)$_2$ erfolgte.

Als alkalische Komponente können Hydroxide der Alkalimetalle, Carbonate der Alkalimetalle, Hydroxide der Erdalkalimetalle, Carbonate der Erdalkalimetalle, Oxide des Calciums, Strontiums oder Bariums oder Ammoniak verwendet werden.

Die alkalische Komponente wird in einer Menge, die 1.2 bis 2.5 Äquivalenten entspricht, bevorzugt 1.2 bis 1.7 Äquivalenten, besonders bevorzugt 1.5 Äquivalenten, eingesetzt, und zwar bezogen auf die Fällungsreaktion Fe$^{2+}$ + 20H$^-$ $\rightarrow$ Fe(OH)$_2$. So benötigt man bei Verwendung von CO$_3^{2-}$ z.B. nur ein mol Carbonat pro mol Fe-II. Die Konzentration der alkalischen Komponente liegt zwischen 1.25 und 6 Äquivalenten Hydroxylionen pro Liter, bevorzugt zwischen 2.5 und 5.5 Äquivalenten Hydroxylionen pro Liter, besonders bevorzugt zwischen 2.25 und 4.5 Äquivalenten Hydroxylionen pro Liter.

Die Konzentration der Eisen-II-komponente liegt zwischen 20 und 200 g/l Fe, bevorzugt zwischen 30 und 150 g/l, Fe besonders bevorzugt zwischen 50 und 100 g/l Fe.

Als Oxidationsmittel können Luftsauerstoff, reiner Sauerstoff, Nitrate, Chlorate(I), Chlorate(V), Chlorate(VII), elementares Chlor, Peroxodisulfate, Ozon oder H$_2$O$_2$ verwendet werden. Um das Verfahren besonders kostengünstig zu gestalten, wird vorzugsweise Luftsauerstoff verwendet. Wo besonders kostengünstig elementares Chlor zur Verfügung steht, kann dies eingesetzt werden. Der Einsatz der genannten anderen Oxidationsmittel ist generell möglich und kann z.B. bei einer kontinuierlichen Verfahrensweise vorteilhaft sein. Die Salze unter diesen Oxidationsmitteln sind z.B. vorteilhaft in gelöster Form einsetzbar und reagieren deutlich schneller als Luftsauerstoff. Ist die Reaktionsgeschwindigkeit hoch genug, kann die Reaktion kontinuierlich durchgeführt werden.

**Beschreibung der analytischen Untersuchungen**

**1. Messung der Farbwerte in L64thix, Aufhellung**

Die verwendete Alkydharzpaste ("L 64") wird in mehreren Normen als Hauptbestandteil eines Prüfbindemittels zur farbmetrische Analysen empfohlen. In DIN-Normen wird als rheologisches Additiv pyrogene Kieselsäure wie Aerosil® 200 (De-gussa AG, DE) beschrieben. In ISO-Normen wird statt dessen Calciumstearat als Zusatzstoff vorgeschrieben. Sachtleben verwendet wiederum ein sehr feinteiliges, gefälltes Bariumsulfat, Sachtoperse® HP (Sachtleben AG, DE). Wir verwenden ein pulverförmiges, modifiziertes, hydriertes Rizinusöl, Luvothix® HT (Lehmann & Voss & Co., DE) in einer Konzentration von 5,0 Gew.-%.

Die in der Routineprüfung eingesetzte Weißpaste kann für diese Methode nicht eingesetzt werden, da die Weißpaste nicht mit dem für Absolutwerte erforderlichen konstanten Streuvermögen hergestellt werden kann. Statt dessen wird eine definierte Menge pulverförmiges Titandioxidpigment während der Anreibung auf dem Muller, einer Teller-Farbenausreibmaschine (ENGELSMANN, Typ JEL) zugesetzt. Die erhaltenen Ergebnisse sind weitgehend identisch.

Das Pigment wird mit dem Muller in einem nichttrocknenden Prüfbindemittel präpariert. Das Prüfbindemittel (Paste) besteht aus zwei Komponenten:

Komponente 1:

Sacolyd® L 640 (Krems Chemie AG, AU, Alkydharz-Bindemittel auf Basis Leinöl und Phthalsäureanhydrid) (vormals Alkydal® L 64 (Bayer AG, DE)). Es entspricht den Spezifikationen, die in den Normen DIN EN ISO 787-24 (Oktober 1995), ISO 787- 25:1993 und DIN 55983 (Dezember 1983) als Anforderungen an ein Prüfbindemittel für Farbpigmente genannt werden.

Komponente 2:

Luvothix® HT (Lehmann&Voss & Co., DE, pulverförmiges, modifiziertes, hydriertes Rizinusöl) als rheologisches Additiv, welches zum thixotropieren der Paste zugesetzt wird. Es wird in einer Konzentration von 5,0 Gew.-%, bezogen auf Komponente 1 eingesetzt.

Die Komponente 2 wird in der Komponente 1 bei 75 - 95 °C gelöst. Die abgekühlte, stichfeste Masse wird einmal über ein Dreiwalzwerk gegeben. Damit ist die Paste fertiggestellt. Verwendet wird eine Teller-Farbenausreibmaschine (Muller), wie in DIN EN ISO 8780-5 (April 1995) beschrieben. Zur Anwendung kommt ein EN-GELSMANN JEL 25/53 Muller mit einem wirksamen Tellerdurchmesser von 24 cm. Die Drehzahl des unteren Tellers beträgt ca. 75 min-1. Durch Einhängen eines 2,5 kg Belastungsgewichtes auf den Belastungsbügel wird die Kraft zwischen den Tellern auf ca. 0,5 kN eingestellt.

Als Aufhellmittel wird ein handelsübliches Titandioxidpigment, Tronox® R-KB-2, Kerr-McGee Corp., US) (vorm. Bayertitan® R-KB-2 (Bayer AG, DE)), verwendet. R-KB-2 entspricht in seiner Zusammensetzung dem Typ R 2 in ISO 591 - 1977. Wird statt R-KB-2 ein anderes R 2 - Pigment verwendet, so können bei der Farbmessung abweichende CIELAB-Koordinaten erhalten werden. Es werden 0,4g zu prüfendes Pigment, 2,0 g Tronox® R-KB-2 und 3,0 g Paste in fünf Stufen zu je 25 Umdrehungen nach dem in DIN EN ISO 8780-5 (April 1995) Abschnitt 8.1 beschriebenen Verfahren dispergiert.

Anschließend wird die Pigment-Pasten-Mischung in einen Pastenteller eingestrichen, der in seiner Funktion dem Pastenteller in DIN 55983 (Dezember 1983) entspricht. Die zum Pastenteller gehörige Rakel wird über die mit der Pigment-Pasten-Mischung gefüllte Vertiefung des Tellers gezogen, so dass ein glatte Oberfläche entsteht. Die Rakel wird dabei in einer Richtung mit einer Geschwindigkeit von ca. 3 - 7 cm/s bewegt. Die glatte Oberfläche wird innerhalb weniger Minuten gemessen.

Farbmessgerät

Es wird ein Spektrophotometer ("Farbmessgerät") mit der Messgeometrie d/8 ohne Glanzfalle verwendet. Diese Messgeometrie ist in ISO 7724/2-1984 (E), Punkt 4.1.1, in DIN 5033 Teil 7 (Juli 1983), Punkt 3.2.4 und in DIN 53236 (Januar 1983), Punkt 7.1.1 beschrieben.

Zur Anwendung kommt ein Dataflash® 2000-Meßgerät (Datacolor International Corp., USA). Das Farbmessgerät wird gegen einen weißen, keramischen Arbeitsstandard kalibriert, wie in ISO 7724/2-1984 (E) Punkt 8.3 beschrieben. Die Reflexionsdaten des Arbeitsstandards gegen einen ideal mattweißen Körper sind im Farbmessgerät hinterlegt, so dass nach Kalibrierung mit dem weißen Arbeitsstandard alle Farbmessungen auf den ideal mattweißen Körper bezogen werden. Die Schwarzpunktkalibrierung wird mit einem schwarzen Hohlkörper des Farbmessgeräteherstellers ausgeführt.

Farbmessung

Das Ergebnis der Farbmessung ist ein Reflexionsspektrum. Für die Berechnung von farbmetrischen Größen spielt es keine Rolle, bei welcher Lichtart die Messung erfolgte (außer bei fluoreszierenden Proben). Aus dem Reflexionsspektrum kann jede beliebige farbmetrische Größe berechnet werden. Bei der Messung müssen jedoch einige Randbedingungen beachtet werden.

Eine eventuell vorhandene Glanzfalle ist ausgeschaltet. Die Temperatur von Farbmessgerät und Prüfling beträgt ca. 25 °C ±5 °C.

Messung des Lackaufstriches

Der Aufstrich wird so an das Farbmessgerätes gelegt, so dass die Messöffnung eine mittlere Stelle der Lackschicht abdeckt. Der Aufstrich muss vollständig und plan anliegen. Die Messöffnung muss vollständig von der Lackschicht bedeckt sein. Anschließend erfolgt die Messung.

Messung des Pastentellers

Die Farbmessung erfolgt unmittelbar nach dem Einstreichen in den Pastenteller. Der gefüllte Pastenteller wird so an das Farbmessgerätes gelegt, dass die Messöffnung vollständig von der mit Paste bestrichenen Vertiefung des Tellers ausgefüllt ist. Der Teller muss vollständig und plan anliegen. Anschließend erfolgt die Messung.

Berechnung der CIE-Koordinaten

Die CIE 1976 ($L^*$, $a^*$, $b^*$)-Koordinaten (kurz CIELAB) eines Reflexionsspektrums sind abhängig von den gewählten Randbedingungen bei der Messung und der Auswertung. Die angegebenen Daten für den Wellenlängenbereich von 400 nm bis 700 nm und das Intervall von 20 nm sind gültig für die zur Zeit eingesetzten Dataflash® 2000-Farbmessgeräte (Stand: 7/97).

Es werden nur die Koordinaten $L^*$, $a^*$ und $b^*$ angegeben. Alle weiteren Größen sind redundant.

Aus dem gemessenen Reflexionsspektrum werden nach den Berechnungsanweisungen in ASTM E 308 - 1985, Punkt 7 die CIE-Koordinaten $L^*$, $a^*$ und $b^*$ von 1976 berechnet. Zur Verwendung kommen die Gewichtungsfunktionen der Normlichtart C und des 2°- Normalbeobachters von 1931 in ASTM E 308 - 1985, Table 5.6. Der Wellenlängenbereich liegt zwischen 400 nm und 700 nm. Das Wellenlängenintervall beträgt 20 nm. Es wird rechnerisch kein Glanz abgezogen. Die Ergebnisse $L^*$, $a^*$ und $b^*$ werden auf ganze Zahlen gerundet.

(Die CIE-Koordinaten werden in DIN 5033 Teil 3 (Juli 1992) Koordinaten des L*a*b*-Farbenraumes genannt. In ISO 7724/3 - 1984 wird die Abkürzung CIELAB-Farbraum eingeführt. Die Koordinaten sind dimensionslos.)

**2. Messung der Farbwerte in Weißzement (Toni-Mischer)**

1200,0 g Quarzsand 0,2 - 1 mm, 600,0 g Quarzsand 1 - 2 mm (beide Sandsorten "Quarzwerke GmbH", Frechen, DE) und 200,0 g Kalksteinmehl (5 % maximaler Siebrückstand > 90 um, "Rheinische Kalksteinwerke GmbH", Wülfrath, DE) werden zusammen im Mischbehälter des Toni-Mix Mischgerät (Firma "Toni-Technik Baustoffprüfsysteme GmbH", Berlin, DE) vorgelegt.

Anschließend wird 6,000 g des zu prüfenden Pigments zugegeben und 10 s auf der langsamen Stufe unter Verwendung des Mörtelmischers vorgemischt. Danach wird der Behälter ausgespannt und mit dem Spatel die Trockenmischung zusätzlich durchmischt.

Zu dieser Mischung wird nun 500,0 g Weißzement ("Dyckerhoff Zement GmbH" Amöneburg, DE, CEM I 42,5R oder 52,5 R) gegeben. Anschließend erfolgt mit der Inbetriebnahme des Toni-Mischers die Zudosierung von 175,0 g dest. Wasser durch einen Tropftrichter, wobei darauf zu achten ist, dass das Wasser in die Mitte der Mischung eingebracht wird. Die Wasserzugabe erfolgt innerhalb von 20 s. Der erneute Dispergierschritt unter Verwendung der langsamen Rührstufe dauert 100 s.

Mit dieser Mischung wird die Pressform (Innenmaße 100 x 100 x 70 mm) gefüllt, bis die Mischung ca. 1 cm vom oberen Rand der Form entfernt ist und anschließend in der Stahlpressform mit 300 bar verpresst.

Mit einem Minolta CR310 Farbmessgerät werden auf der durch die Pressung entstandenen Oberfläche in der Pressform direkt nach der Pressung vier sich nicht überlappende Bereiche gemessen. Verwendet werden die Normlichtart C und der 2°-Beobachter. Mit dem Bezugspigment wird genauso verfahren, dabei muss auf absolute Gleichbehandlung bei der Präparation geachtet werden.

Die aus den vier Messungen einer Oberfläche erhaltenen Werte werden gemittelt. Die Auswertung erfolgt durch Anwendung der Saunderson-Korrektur, wobei die Konstanten für einen Brechungsindex von 1,5 gewählt werden, auf die aus der Farbmessung nach DIN 53 140 erhaltenen gemittelten und durch 100 dividierten Reflektometerwerte. Anschließend erfolgt die Berechnung der Kubelka-Munk Funktion für die erhaltenen Werte.

Als Farbstärke wird dabei das Verhältnis der für Probe und Bezug auf diese Weise aus dem Normfarbwert Y gewonnenen Ergebnisse definiert (s. Hans G. Völz, Industrielle Farbprüfung, VCH, 1990).

Angegeben werden jeweils die Mittelwerte aus Doppelbestimmungen.

### 3. Messung der BET-Oberfläche

Die BET-Oberfläche wird in Anlehnung (die Abweichungen von der Norm betreffen die angegebenen Parameter) an DIN 66 131 bestimmt. Gasgemisch: 90 Vol.-% He, 10 Vol.-% $N_2$, Messtemperatur: 77.4 K, Ausheizen bei 140°C, 60 Minuten.

### 4. Röntgenographische Kristallitgröße

Die Bestimmung der Kristallitgröße erfolgt am Phillips-Pulverdiffraktometer. Zur Bestimmung der Kristallitgröße wird der 110-Reflex herangezogen.

$\alpha$-Eisenoxidhydroxid (M(FeOOH) = 88,9 g/mol

#### 4.1 Anwendungsbereich
Bestimmung der Kristallitgröße in Goethit im Bereich von 5 bis 100 nm.

#### 4.2 Grundlage
Die Bestimmung in Goethit erfolgt nach röntgendiffraktometrischer Bestrahlung durch Reflexionsdetektion. Die Auswertung erfolgt über Silicium als externer Standard.

#### 4.3 Reagenz
Silicium Standard für Winkelkalibration (ICDD-Nr. 27-1402), Philips PW 1062/20

#### 4.4 Geräte

4.4.1 Diffraktometer: Philips PW 1800 Goniometer Typ: Theta - 2 Theta
4.4.2 Probenzuführung: 21-fach Probenwechsler
4.4.3 Detektor: Xe-Proportionalzählrohr
4.4.4 Reflexauswertung: X-Pert Software Rev. 1.2 auf HP Vectra VL
4.4.5 Reibschale und Pistill aus Achat
4.4.6 Probenträger:        Philips PW 1811/00 und PW 1811/27

#### 4.5 Röntgendiffraktometrische Bedingungen

4.5.1 Röntgenröhre:        Langfeinfocus, Cu Anode, 60 kV, 2200 W

4.5.2 Strahlung:        $CuK\alpha_1$, $\lambda = 0,154056$ nm

4.5.3 Generator:        40 kV, 40 mA

4.5.4 Scan Parameter:

4.5.4.1 Scan Typ:        Step Scan
4.5.4.2 Schrittgröße:        0,020° 2Theta
4.5.4.3 Schrittmesszeit:        2,00 s

4.5.5 Silicium-Standard:

4.5.5.1 Startwinkel:        27,00° 2Theta
4.5.5.2 Endwinkel:        30,00° 2Theta

4.5.6 Probe:

    4.5.6.1 Startwinkel:     18,50° 2Theta
    4.5.6.2 Endwinkel:     23,50° 2Theta

**4.6     Ausführung**

4.6.1     Externer Standard:

4.6.1.1     Silicium-Standard (3.1) in den Probenträger des Diffraktometers einbringen und das Messprogramm starten.

4.6.1.2     Das Maximum und die Halbwertsbreite des Silicium Reflexes mit den Millerschen Indizes hkl = 111 in dem 2Theta Winkelbereich 27,00° bis 30,00° bestimmen. Die Peakparameter (Tab. 1) und gegebenenfalls das Diffraktogramm ausdrucken.

4.6.2     Bestimmung in der Probe:

4.6.2.1     Etwa 2 g Probe in der Achatreibschale (4.5) verreiben.

4.6.2.2     Etwa 1 g Probe in den Probenträger (4.6) des Diffraktometers einbringen und das Messprogramm starten.

4.6.2.3     Das Maximum und die Integrale Breite des Goethitreflexes mit den Millerschen Indizes hkl = 110 in dem 2Theta Winkelbereich 18,50° bis 23,50° bestimmen. Die Peakparameter (Tab. 2) und gegebenenfalls das Diffraktogramm ausdrucken.

**4.7     Berechnungen**

4.7.1     In die vom Rechner angezeigte Kristallitgrößen-Bestimmungstabelle (X'Pert Software, Rev. 1.2, (Philips Analytical GmbH, Kassel, DE) Profile Widths) die Integrale Breite (Width of Broadened Profile), das Maximum (Peak Position/° 2Theta) des Goethitreflexes sowie die Reflexhalbwertsbreite (Width of Standard Profile/FWHM) des Silicium-Standards eintragen. Das Auswerteprotokoll erstellen und ausdrucken (Tab. 2).

4.7.2 Die Bestimmung der Kristallitgröße im X'Pert-Programm erfolgt nach der Scherrer-Gleichung:

$$D_{(Kristallitgröße)} \frac{k \cdot \lambda}{W_{side} \cdot \cos^{\theta}}$$

| | |
|---|---|
| $D_{(Kristallitgröße)}$ | Kristallitgröße in nm |
| k | Formfaktor der Kristallite = 0,9 (Literaturmittelwert) |
| $\lambda$ | Wellenlänge in nm |
| $W_{Size}$ | Integrale Breite des Goethitreflexes - Reflexhalbwertsbreite des Silicium-Standards |
| $\cos\theta$ | Maximum des Goethitreflexes in °2Theta |

Tabelle 1

| Peakparameter des Silicium-Reflexes | |
|---|---|
| Parameter | |
| Signal-Lage, Höchstwert [Position (°2Theta)] | 28,45746 |
| Netto-Signalhöhe [Net height (counts)] | 8588,32 |

Tabelle 1   (fortgesetzt)

| Peakparameter des Silicium-Reflexes | | |
|---|---|---|
| Parameter | | |
| Untergrundhöhe bei der Signal-Lage [Background height at peak position (counts)] | | 66,56 |
| Netto-Fläche [Net area (°2Theta * counts)] | | 1182 |
| Untergrund-Fläche [Background area (°2Theta * counts)] | | 200 |
| Signalhöhen-Halbwertsbreite [FWHM (°2Theta)] | | 0,0976 |
| Integrale Breite [Integral breadth (°2Theta)] | | 0,1376 |
| Signalhöhen-Halbwertsbreite / Integrale Breite [FWHM / Integrad breadth] | | 0,7094 |
| Unsymmetriefaktor [Asymmetry] | | 0,99 |
| | | |
| Untergrund [Background] | | |
| Startwinkelwert [Low angle side] | (°2Theta) | 27,02000 |
| | (counts) | 61,58 |
| Endwinkelwert [High angle side] | (°2Theta) | 29,98000 |
| | (counts) | 71,75 |

Tabelle 2

| Peakparameter der Goethit-Probe: Kristallitgröße 46,5 nm | | |
|---|---|---|
| Signal-Lage, Höchstwert [Position (°2Theta)] | | 21,25219 |
| Netto-Signalhöhe [Net height (counts)] | | 2120,73 |
| Untergrundhöhe bei der Signal-Lage [Background height at peak position (counts)] | | 44,92 |
| Netto-Fläche [Net area (°2Theta * counts)] | | 589 |
| Untergrund-Fläche [Background area (°2Theta * counts)] | | 237 |
| Signalhöhen-Halbwertsbreite [FWHM (°2Theta)] | | 0,2061 |
| Integrale Breite [Integral breadth (°2Theta)] | | 0,2779 |
| Signalhöhen-Halbwertsbreite / Integrale Breite [FWHM / Integrad breadth] | | 0,7415 |
| Unsymmetriefaktor [Asymmetry] | | 1,16 |
| | | |
| Untergrund [Background] | | |
| Startwinkelwert [Low angle side] | (°2Theta) | 18,54000 |
| | (counts) | 58,38 |
| Endwinkelwert [High angle side] | (°2Theta) | 23,67000 |
| | (counts) | 33,05 |

Tabelle 3

| Kristallitgrößenbestimmung über X'Pert Programm; Scherrer Gleichung Menüpunkt: Zusatzfünktionen im X'Pert Programmteil: X'Pert Organiser | |
|---|---|
| Anoden - Material | Cu (Kupfer) |
| Strahlungstyp | Cu K$\alpha$ |

Tabelle 3   (fortgesetzt)

| Kristallitgrößenbestimmung über X'Pert Programm; Scherrer Gleichung Menüpunkt: Zusatzfünktionen im X'Pert Programmteil: X'Pert Organiser | | | | | |
|---|---|---|---|---|---|
| Wellenlänge (nm) | | | 0,154184 | | |
| K - Faktor (Formfaktor-Mittelwert) | | | 0,9000 | | |
| Intensitätsverhältnis Cu $K\alpha_1$ / Cu $K\alpha_2$ | | | 0,5000 | | |
| Signalweite der Verbreiterung | Signal-breite | Korngrößen-Verbreiterung | Gitterspannungs-Verbreiterung | Signal-Lage | Kristallit-Größe |
| (°2Theta) | (°2Theta) | (°2Theta) | (°2Theta) | (°2Theta) | (nm) |
| 0,1376 | 0,0976 | 0,0400 | 0,0970 | 28,45500 | 205,1 |
| 0,2779 | 0,0976 | 0,1803 | 0,2602 | 21,25400 | 44,9 |
| 0,2766 | 0,0976 | 0,1790 | 0,2588 | 21,25100 | 45,2 |
| 0,8814 | 0,0976 | 0,7838 | 0,8760 | 21,22800 | 10,3 |
| 0,9325 | 0,0976 | 0,8349 | 0,9274 | 21,24400 | 9,7 |
| 0,4287 | 0,0976 | 0,3311 | 0,4174 | 21,22090 | 24,4 |
| 0,4274 | 0,0976 | 0,3298 | 0,4161 | 21,21911 | 24,5 |

**5. Elementanalyse Mn**

Mangan wird in einer in HCl vollständig gelösten Probe mittel ICP-OES ("Inductive Coupled Plasma Optical Emmission Spectroscopy", einer gängigen Methode in der Spurenanalytik) bestimmt.

**Beispiele**

**Beispiel 1**

12.044 Liter einer Natronlauge von 100 g/l (30.111 mol NaOH) werden in einem Rührkessel von 30 Liter Inhalt mit Balkenrührer und Begasungsring am Boden des Rührkessels auf 54°C aufgeheizt. Nach Erreichen dieser Temperatur werden 12.675 Liter einer Eisen-II-chloridlösung mit einem Fe-III-Gehalt von 0.5 mol-% Fe-III und einem Mangangehalt von 0.35 Gew.-% Mn (bezogen auf den Eisengehalt) und einem $FeCl_2$-Gehalt von 100 g/l = 44.2 g/l Fe (10.0 mol) in 40 Minuten zugepumpt. Anschließend wird mit 100 Liter pro Stunde 226 Minuten Luftsauerstoff durch den Begasungsring geleitet. Das entstandene Eisenoxidgelb hatte folgende Eigenschaften:

| Helligkeit L* | 82.1 |
|---|---|
| a* | 2.6 L64thix, Aufhellung |
| b* | 35.2 |
| Helligkeit L* | 61.3 |
| a* | 0.7 Weißzement |
| b* | 30.1 |
| BET-Oberfläche [m2/g] | 29.0 |
| Kristallitgröße [A] | 210 |
| Mn-Gehalt [Gew.- %] | 0.29 |

**Beispiel 2**

12.000 Liter einer Natronlauge von 100 g/l (30.0 mol NaOH) werden in einem Rührkessel von 30 Liter Inhalt mit Balkenrührer und Begasungsring am Boden des Rührkessels auf 64°C aufgeheizt. Nach Erreichen dieser Temperatur werden 12.675 Liter einer Eisen-II-chloridlösung mit einem Fe-III-Gehalt von 0.5 mol-% Fe-III und einem Mangangehalt von 0.35 Gew.-% Mn (bezogen auf den Eisengehalt) und einem $FeCl_2$-Gehalt von 100 g/l = 44.2 g/l Fe (10.0 mol) in 40 Minuten zugepumpt. Anschließend wird mit 100 Liter pro Stunde 234 Minuten Luftsauerstoff durch den Begasungsring geleitet. Das entstandene Eisenoxidgelb hatte folgende Eigenschaften:

| | |
|---|---|
| Helligkeit L* | 81.1 |
| a* | 2.7 L64thix, Aufhellung |
| b* | 35.0 |
| Helligkeit L* | 61.8 |
| a* | 0.8 Weißzement |
| b* | 30.6 |
| BET-Oberfläche [m2/g] | 18.8 |
| Kristallitgröße [A] | 275 |
| Mn-Gehalt [Gew.- %] | 0.27 |

**Beispiel 3**

9.520 Liter einer Natronlauge von 200 g/l (47.60 mol NaOH) werden in einem Rührkessel von 30 Liter Inhalt mit Balkenrührer und Begasungsring am Boden des Rührkessels auf 59°C aufgeheizt. Nach Erreichen dieser Temperatur werden 17.238 Liter einer Eisen-II-chloridlösung mit einem Fe-III-Gehalt von 0.5 mol-% Fe-III und einem Mangangehalt von 0.35 Gew.-% Mn (bezogen auf den Eisengehalt) und einem $FeCl_2$-Gehalt von 125 g/l = 55.3 g/l Fe (10.0 mol) in 45 Minuten zugepumpt. Anschließend wird mit 170 Liter pro Stunde 342 Minuten Luftsauerstoff durch den Begasungsring geleitet. Das entstandene Eisenoxidgelb hatte folgende Eigenschaften:

| | |
|---|---|
| Helligkeit L* | 81.3 |
| a* | 2.6 L64thix, Aufhellung |
| b* | 34.7 |
| Helligkeit L* | 61.6 |
| a* | 0.5 Weißzement |
| b* | 30.2 |
| BET-Oberfläche [m2/g] | 23.0 |
| Kristallitgröße [D] | 250 |
| Mn-Gehalt [Gew.- %] | 0.29 |

**Beispiele 4-9**

Es wurde wie in Beispiel 1 beschrieben verfahren. Folgende Einstellungen wurden gewählt:

| Beispiel-Nr. | NaOH mol | cNaOH g/l | Fe- Komponente | Fe mol | cFe g/l | Temp. °C | Fällzeit min | Luft l/h |
|---|---|---|---|---|---|---|---|---|
| 4 | 40 | 200 | $FeCl_2$ | 10 | 80 | 60 | 45 | 100 |
| 5 | 40 | 200 | $FeCl_2$ | 10 | 80 | 75 | 45 | 100 |
| 6 | 40 | 300 | $FeCl_2$ | 10 | 80 | 75 | 45 | 100 |
| 7 | 40 | 200 | $FeSO_4$ | 10 | 80 | 60 | 45 | 100 |
| 8 | 30 | 300 | $FeCl_2$ | 10 | 70 | 60 | 45 | 100 |
| Vergl. 1 | 30 | 100 | $FeCl_2$ | 10 | 44.2 | 34 | 40 | 100 |
| Vergl. 2 | 22 | 100 | $FeCl_2$ | 10 | 44.2 | 60 | 40 | 100 |

Das verwendete Eisen-II-chlorid hatte einen Fe-III-Gehalt von 0.9 mol-% Fe-III und einen Mn-Gehalt von 0.35 Gew.-% bezogen auf den Fe-Gehalt.

Das in Versuch 7 eingesetzte FeSO4 hatte einen Fe-III-Gehalt von 1.1 mol-% Fe-III und einen Mn-Gehalt von 0.28 Gew.-% bezogen auf den Eisengehalt.

Diese Versuche führten zu den unten aufgelisteten Ergebnissen:

| Aufhellung, L64thix+ Weißzement | | | | | | | | | |
|---|---|---|---|---|---|---|---|---|---|
| Beispiel-Nr. | Oxidations-zeit [min] | L* | a* | b* | L* | a* | b* | BET [m$^2$/g] | KG nm |
| 4 | 220 | 81.1 | 2.5 | 34.2 | 61.3 | 0.7 | 31.0 | 22.8 | 26 |
| 5 | 190 | 81.4 | 2.7 | 34.7 | 61.5 | 0.8 | 31.4 | 19.5 | 31 |
| 6 | 230 | 81.3 | 2.6 | 34.5 | 61.4 | 0.6 | 31.3 | 21.3 | 28 |
| 7 | 210 | 81.0 | 3.2 | 33.8 | 61.2 | 1.3 | 30.6 | 24.9 | 25 |
| 8 | 165 | 81.2 | 2.5 | 34.7 | 61.5 | 0.7 | 31.5 | 20.9 | 29 |
| Vergl. 1 | 205 | 78.5 | 1.6 | 28.6 | 60.5 | 0.1 | 29.8 | 62.5 | 12 |
| Vergl. 2 | 185 | 60.2 | 0.2 | 21.5 | 53.4 | 0.0 | 24.6 | 21.0 | 28 |

Der Versuch Vergl. 2 enthält geringe Anteile Magnetit. Der analysierte Mn-Gehalt lag bei den Versuchen mit $FeCl_2$ zwischen 0.26 und 0.29 Gew.-%.

Beim Versuch 7 lag der Mn-Gehalt bei 0.21 Gew.-%.

## Patentansprüche

1.  Verfahren zur Herstellung eines Eisenoxidgelbs ausgehend von Lösungen von $FeSO_4$ oder $FeCl_2$ mit einem Fe-III-Gehalt von 0.0 bis 4.0 mol-% Fe-III, bevorzugt 0.5 bis 1.5 mol-% Fe-III und einem Mn-Gehalt von bis zu 0.7 Gew.-% bezogen auf den Fe-Gehalt, bevorzugt von bis zu 0.4 Gew.-% bezogen auf den Fe-Gehalt, **dadurch gekennzeichnet, dass**

    a) zu einer Lösung oder Suspension einer alkalischen Komponente, die auf eine Temperatur zwischen 42 und 75°C, bevorzugt 45 bis 60°C aufgeheizt wurde, eine Eisen-II-komponente gegeben wird und

    b) die entstandene Suspension mit einem Oxidationsmittel solange oxidiert wird, bis alles Eisen-II in Eisen-III als $\alpha$-FeOOH überführt worden ist, wobei

    die Zugabe des Oxidationsmittels in einer Geschwindigkeit erfolgt, dass die Oxidationsdauer zwischen 120 und 600, bevorzugt zwischen 180 und 360 Minuten liegt und die Reaktion während der gesamten Oxidationszeit mindestens bei der Temperatur zwischen 42 und 75°C liegt, bei der die Fällung von $Fe(OH)_2$ erfolgte.

2.  Verfahren gemäß Anspruch 1, **dadurch gekennzeichnet, dass** als alkalische Komponente Hydroxide der Alkalimetalle, Carbonate der Alkalimetalle, Hydroxide der Erdalkalimetalle, Carbonate der Erdalkalimetalle, Oxide des Calciums, Strontiums oder Bariums oder Ammoniak verwendet werden.

3.  Verfahren gemäß Ansprüchen 1 bis 2, **dadurch gekennzeichnet, dass** die alkalische Komponente in einer 1.2 bis 2.5 Äquivalenten Alkali entsprechenden Menge, bevorzugt 1.2 bis 1.7 Äquivalenten, bezogen auf die Stöchiometrie der Reaktion, eingesetzt wird.

4.  Verfahren gemäß Ansprüchen 1 bis 3, **dadurch gekennzeichnet, dass** die Konzentration der alkalischen Komponente zwischen 1.25 und 6 Äquivalenten Alkali pro Liter, bevorzugt zwischen 2.5 und 5.5 Äquivalenten Alkali pro Liter, besonders bevorzugt zwischen 2.25 und 4.5 Äquivalenten Alkali pro Liter, liegt.

5.  Verfahren gemäß Ansprüchen 1 bis 4, **dadurch gekennzeichnet, dass** die Konzentration der Eisen-II-komponente zwischen 20 und 200 g/l Fe, bevorzugt zwischen 30 und 150 g/l Fe, besonders bevorzugt zwischen 40 und 100 g/l Fe liegt.

6.  Verfahren gemäß Ansprüchen 1 bis 5, **dadurch gekennzeichnet, dass** als Oxidationsmittel Luftsauerstoff, reiner Sauerstoff, Nitrate, Chlorate(I), Chlorate(V), Chlorate(VII), elementares Chlor, Peroxodisulfate, Ozon oder $H_2O_2$ verwendet werden.

7.  Verwendung des nach Ansprüchen 1 bis 6 hergestellten Eisenoxids zur Einfärbung von Baustoffen.

8.  Verwendung gemäß Anspruch 7 in Beton.

9.  Verwendung des nach Ansprüchen 1 bis 6 hergestellten Eisenoxids in Dispersionsfarben.

10. Verwendung des nach Ansprüchen 1 bis 6 hergestellten Eisenoxids in Kunststoffen.